# EUROPEAN PATENT APPLICATION

(11) **EP 3 862 312 A1**
(43) Date of publication of application: **11.08.2021**
(21) Application number: 20156275.8
(22) Date of filing: 10.02.2020
(51) Int. Cl.: B67D 1/00, B01D 61/02, C02F 1/44

(54) **BEVERAGE DISPENSER WITH EFFICIENT WATER FILTRATION**

(71) Applicant: Riprup Company S.A., GY1 St. Peter Port (GG)
(72) Inventor: Bissen, Monique, 75175 Pforzheim (DE); Schucker, Josef, 6622 Ronco Sopra Ascona (CH)
(74) Representative: Wittmann, Günther

(57) **Abstract**

The present invention discloses a beverage dispenser, having
- a tank, in which the raw water is stored;
- a beverage dispenser inlet coupled with the tank for drawing water from the tank;
- an outlet for outputting beverage;
- a reverse osmosis filter for filtering the input water having a reverse osmosis filter inlet, a permeate outlet for outputting permeate and a concentrate outlet for outputting concentrate, wherein the inlet of the reverse osmosis filter is coupled with the beverage dispenser inlet;
- a concentrate conduit having a concentrate conduit inlet connected to the concentrate outlet of the reverse osmosis filter and a concentrate conduit outlet arranged that concentrate can flow into the tank, wherein ozone may be emitted into a liquid flowing into the tank;
- a first water quality sensor coupled between the beverage dispenser inlet and the reverse osmosis filter inlet; and
- a controller connected with the first water quality sensor;
- wherein the first water quality sensor transmits a water quality indicator value indicative of the quality of the water drawn from the tank to the controller; and
- wherein the controller is adapted to at least one of the following:
- stop operation of the pump, if the water quality value transmitted from the first quality sensor is below a predefined threshold; and
- request discharge and refilling of the tank, if the water quality value transmitted from the first quality sensor is below a predefined threshold.

## Description

### Field of the Invention

The present invention relates to a beverage dispenser for fulfilling high efficiency requirements in terms of water consumption. Particularly, the present invention relates to a beverage dispenser for use in households, restaurants, hotels, offices, hospital, nursing points or the like. The beverage dispenser is adapted for dispensing a beverage into a user vessel such as a glass, a cup, a carafe or a portable bottle. Particularly, the present invention relates to a beverage dispenser adapted to dispense beverage by a nozzle for a single person or for small groups of persons into a portable vessel such as a carafe or bottle. Small groups are considered to be formed by 2 to approximately 10 persons. The beverage is output by a nozzle into the user vessel. The raw water is drawn from a tank. The tank may be filled with tap water, for example.

### Prior art

Beverage dispensers are known to persons skilled in the art. In one type of beverage dispensers a small barrel or a bag, both made of plastics, are inserted into an inlet of a beverage dispenser and beverage from the barrel or bag is output by a nozzle. Some beverage dispensers can provide carbonized water upon request or cool the water upon request. Another type of beverage dispenser is connected to a water source such as tap water. The water may be filtered by a sediment filter, an activated carbon filter, an ion exchanger filter, a reverse osmosis filter or the like.

The present invention particularly relates to beverage dispensers having a tank. The tank may be filled by tap water. The tank may be removed for refilling the tank with tap water. The water in the tank may be filtered by a reverse osmosis filter. Reverse osmosis filters are known by the person skilled in the art and do not have to be explained in detail herein. Generally, a reverse osmosis filter comprises an inlet for receiving pressurized water, a permeate outlet for filtered water and a concentrate outlet for not filtered water and/or drain water. Generally, the permeate passes by virtue of pressure a permeable membrane.

Generally, in beverage dispensers between 70 to 80 % of the water input into the reverse osmosis filter is drained by the concentrate outlet and only 20 % to 30 % are used for drinking water purposes. This leads to a low efficiency of the beverage dispenser in terms of raw water consumption and to a low permeate yield per volume of raw water.

### Summary of the Invention

It is therefore an object of the present invention to provide a beverage dispenser having a high efficiency in terms of water consumption.

The object of the present invention is achieved by a beverage dispenser according to claim 1 and a method according to claim 15.

A beverage dispenser according to the present invention comprises a tank, in which raw water is to be filled, such as tap water. The beverage dispenser further comprises a beverage dispenser inlet coupled with the tank for drawing water from the tank. The beverage dispenser further comprises an outlet for outputting beverage into a user vessel, such as a glass, a cup, a bottle, a carafe or the like. The beverage dispenser further comprises a reverse osmosis filter for filtering the input water having a reverse osmosis filter inlet, a permeate outlet for outputting permeate and a concentrate outlet for outputting concentrate. The inlet of the reverse osmosis filter is coupled with the beverage dispenser inlet. The concentrate outlet is coupled with the tank such that concentrate flows into the tank. The beverage dispenser comprises a first water quality sensor coupled between the beverage dispenser inlet and the reverse osmosis filter inlet and a controller connected with the first water quality sensor. The first water quality sensor transmits a water quality indicator value indicative of the water quality of the water drawn from the tank to the controller. If the water quality value transmitted from the first quality sensor is lower than a predetermined threshold, the controller stops the operation of the pump, and/or request discharge and refilling of the tank, such as by a message displayed on a screen or by illuminating a warning light. Thereby, the concentrate can be re-filtered and reused, respectively until the concentration of salt and minerals of the water in the tank is so high that a reverse osmosis filtering with a reasonable yield of permeate is impossible.

According to the present invention the concentrate is recycled into the tank. Thereby, the concentrate is mixed with the remaining (raw) water in the tank and the concentrate can be filtered several times by the reverse osmosis filter for increasing the volume of permeate that is created by a predetermined volume of raw water in the tank.

Thereby, the consumption of raw water volume per filtered permeate volume is reduced. In some embodiments the permeate yield is approximately 40 % to approximately 90 % and only approximately 10 % to approximately 60 % of water is drained. The amount of drained water depends on the concentration of salts and/or minerals of the water filled into the tank. The lower the concentration of salts and/or minerals of the water filled into the tank, the lower the volume of water drained.

In one embodiment the beverage dispenser further comprises a concentrate conduit having a concentrate conduit inlet connected to the concentrate outlet of the reverse osmosis filter and a concentrate conduit outlet arranged such that concentrate flows into the tank.

In one embodiment, the tank is removable from the beverage dispenser for filling and refilling the tank. The tank is also removable from the beverage dispenser for discharging the concentrate that has passed several times the reverse osmosis filter. In one embodiment the tank may comprise an opening configured for filling the tank with raw water. In another embodiment, the beverage dispenser may comprise an opening configured for refilling the tank with raw water.

In one embodiment the beverage dispenser may comprise a pump coupled between the beverage dispenser inlet and the reverse osmosis filter inlet. The pump generates a pressure necessary for reverse osmosis filtering in the reverse osmosis filter.

The first water quality sensor may comprise a conductivity sensor or a water hardness measurement sensor and/or a Calcium sensor and/or a Magnesium sensor connected with the controller.

In order to increase the yield of permeate and maximize the water volume used for drinking purposes an antiscalant chemical may be dosed into the water in order to stabilize the water hardness and prevent a fast blockage of the membrane due to precipitation of water hardness on the membrane. The beverage dispenser may comprise an antiscalant dosing element adapted to meter an antiscalant liquid upstream of a membrane of the reverse osmosis filter, wherein the antiscalant dosing element is connected with the controller and wherein the controller controls the volume of dispensed antiscalant liquid depending on the water quality determined by the first water quality sensor. The antiscalant may comprise polymeric organic compounds, phosphonates or polyphosphates, for example. The antiscalant dosing element may dose approximately 10 µl to 300 µl antiscalant per liter of feed water.

If no antiscalant chemical is dosed into the water and if the conductivity of the water drawn from the tank is higher than approximately 450 µS per cm, preferably higher than approximately 500 µS per cm, more preferred higher than 600 µS per cm, the controller is adapted to stop operation of the pump and request discharge and refilling of the tank, such as by displaying a message on the display and/or illuminating a warning lamp.

If antiscalant chemical is dosed into the water and if the conductivity of the water drawn from the tank is higher than approximately 800 µS per cm, preferably higher than approximately 1000 µS per cm, more preferred higher than 1200 µS per cm, the controller is adapted to stop operation of the pump and request discharge and refilling of the tank, such as by displaying a message on the display and/or illuminating a warning lamp.

The antiscalant prevents scaling of the membrane of the reverse osmosis filter. The antiscalant is passed to the concentrate outlet of the reverse osmosis filter during filtering, thus the antiscalant does not affect the taste of beverage generated by the beverage dispenser.

In one embodiment the beverage dispenser further comprises a flow limiter arranged downstream of the concentrate outlet of the reverse osmosis filter. An area of a flow passage of the flow limiter through which concentrate flows determines the proportion between concentrate and permeate output by the reverse osmosis filter.

In one embodiment the flow limiter is configured such that approximately 40 % to 60 %, preferably approximately 45 % to 55 % of the water entering the reverse osmosis filter inlet passes the concentrate outlet. This allows to operate the beverage dispenser in a wide range of tap waters having a different water hardness, salinity or the like. If the water filled in the tank has a low concentration of salts and/or minerals, the concentrate will be re-cycled several times in the tank, until the water has a salt concentration and water hardness that salt precipitation (limescale) occurs on the membrane and blocks the membrane. If the water filled into the tank has a very high concentration of salts and/or minerals, particularly a high water hardness, the concentrate must be drained from the tank generating a low amount of permeate. If the water filled into the tank has a low concentration of salts and/or minerals, particularly a high water hardness, the concentrate must be drained from the tank after generating a higher amount of permeate.

In one embodiment, the flow limiter is connected with the controller. The flow limiter is arranged to adapt the flow rate through the flow limiter in response to a command of the controller, such as by changing the area of a flow passage through which concentrate flows. Thereby, the ratio and proportion, respectively between the permeate volume and concentrate volume can be adapted to the water hardness, salinity, mineral concentration, salt concentration, water hardness or the like of the locally available tap water.

The beverage dispenser may further comprise at least one beverage preparation element and a second water quality sensor downstream of the permeate outlet, wherein the second water quality sensor is connected with the controller. The second water quality sensor monitors proper operation of the reverse osmosis filter by measuring the conductivity of the demineralized water. If the water quality determined by the second water quality sensor (conductivity) is higher than a predetermined threshold, the controller stops operation of the beverage dispenser.

The beverage preparation element may be a beverage tempering element, a beverage carbonization element, a water mineralization element or the like. An exemplary a beverage dispenser embodied by a water dispenser is disclosed by the European patent application EP 19164408.7 entitled "Intelligent Beverage Dispenser" incorporated herein in its entirety by reference.

The beverage dispenser may further comprise a disinfection agent emitting device. In one embodiment the disinfection agent emitting device is configured to inject disinfection agent into an aqueous liquid passed into the tank. In another embodiment the disinfection agent emitting device is configured to inject disinfection agent into an aqueous liquid in the tank.

The beverage dispenser may further comprise an ozone emitting element embodying the disinfection agent emitting device connected to the concentrate conduit for emitting ozone. In one embodiment the ozone emitting element is configured to inject ozone into an aqueous liquid passed into the tank. In another embodiment the ozone emitting element is configured to inject ozone into an aqueous liquid in the tank. In another embodiment the ozone emitting element is configured to inject ozone into the concentrate conduit which is connected to the tank.

In one embodiment the beverage dispenser may further comprise a silver ion emitting element embodying the disinfection agent emitting device connected to the concentrate conduit for emitting silver ion. In one embodiment the silver ion emitting element is configured to inject silver ion into an aqueous liquid passed into the tank. In another embodiment the silver ion emitting element is configured to inject silver ion into an aqueous liquid in the tank. In another embodiment the silver ion emitting element is configured to inject the silver ions into the concentrate conduit which is connected to the tank. The silver ions may be injected by a solution comprising silver nitrate.

The beverage dispenser may comprise a permeate drain conduit coupled between the permeate outlet of the reverse osmosis filter and the tank, wherein the disinfection agent emitting device is configured to inject disinfection agent into the permeate drain conduit. Due to different concentrations of ions on the concentrate side of the membrane of the reverse osmosis filter and of ions on the permeate side of the reverse osmosis filter ions diffuse from the concentrate side of the membrane of the reverse osmosis filter to the permeate side of the reverse osmosis filter during stagnation. Thereby, the ion concentration of the permeate in the reverse osmosis filter is increased during stagnation. To avoid increase of ion concentration during stagnation the permeate is flushed at predetermined time intervals and drained by the permeate drain conduit coupled between the permeate outlet of the reverse osmosis filter and the tank by activating the pump for pressing an aqueous liquid from the tank to the membrane of the reverse osmosis filter. Thereby, permeate and concentrate is generated. The concentrate is passed by the concentrate conduit to the tank. The permeate is passed by the permeate drain conduit to the tank. The disinfection agent emitting device may be adapted to inject the ozone into the permeate drain conduit. Instead of ozone silver ions can be injected.

When using an electrochemical cell, it is an advantage to install the cell in the permeate drain conduit because the problem of scaling of the electrode is lower compared to the installation of the cell in the concentrate. In the alternative, ozone may be formed from oxygen present in the air using Corona electrical discharge, electrolysis of water (such as by alternating current), UV light (emitted by a light source and having a wave length of 182 nm) and/or injection of the ozone using an injector.

In another embodiment the ozone emitting device may be formed by an ozone spray device located at the bottom of the tank.

The ozone is introduced into the concentrate or the permeate in a ppb range in order to prevent ozone odor. Downstream of the inlet of the beverage dispenser an activated carbon filter may be arranged filtering the ozone, such that the taste of the beverage generated by the beverage dispenser is not jeopardized.

In one embodiment the beverage dispenser may comprise at least one beverage preparation element downstream of the permeate outlet of the reverse osmosis filter. A output valve may be connected downstream of at least one beverage preparation element. The output valve is adapted to pass a liquid from the at least one beverage preparation element in a first operation mode to a nozzle for outputting the beverage to a user vessel. The output valve is adapted to pass the liquid from the at least one beverage preparation element in a second operation mode to a drain conduit connected to the tank and/or configured to pass the liquid into the tank. The ozone emitting element emits the ozone into the drain conduit. The first operation mode may be a beverage dispensing mode. The second operation mode may be cleaning mode or a flushing mode or a preparation phase before dispensing beverage, such as for pretempering. This embodiment has the advantage that scaling of the ozone emitting element is prevented.

The object of the present invention is also achieved by a method of operating a beverage dispenser. The method may comprise the step of drawing water from a tank associated with the water dispenser. The water drawn is pumped from the tank to an inlet of a reverse osmosis filter. The filtered water is passed from a permeate outlet of the reverse osmosis filter to at least one beverage preparation element. The concentrate is passed from a concentrate outlet to the tank associated with the beverage dispenser. The method determines at least one parameter of the raw water. If the at least one parameter of the raw water surpasses a predetermined threshold, the method stops drawing water from the tank and/or requests discharge and refilling of the tank. The tank may be removable for discarding concentrate from the tank and filling the tank with tap water. Since the water filled into the tank is passed several times through the reverse osmosis filter a higher portion of the water filled into the tank is used for preparing beverage, namely by generating permeate. Thereby, efficiency of water use is increased, and less tap water is required for preparing a predetermined amount of beverage and permeate, respectively.

### Short description of the figures

The invention is now explained with reference to non-limiting and exemplary embodiments under a reference to the accompanying drawing, wherein
Figure 1 shows a schematic diagram of a first embodiment of a beverage dispenser according to the present invention;
Figure 2 shows a schematic diagram of a second embodiment of a beverage dispenser according to the present invention;
Figure 3 shows a schematic diagram of a third embodiment of a beverage dispenser according to the present invention;
Figure 4 shows a schematic diagram of a fourth embodiment of a beverage dispenser according to the present invention; and
Figure 5 shows a schematic diagram of a fifth embodiment of a beverage dispenser according to the present invention.

### Detailed description of the figures

The present invention is now described in further detail, wherein the disinfection agent emitting device is embodied by an ozone emitting element. However, the disinfection agent emitting device may also be embodied by a silver ion emitting element emitting silver ions, such as silver nitrate.

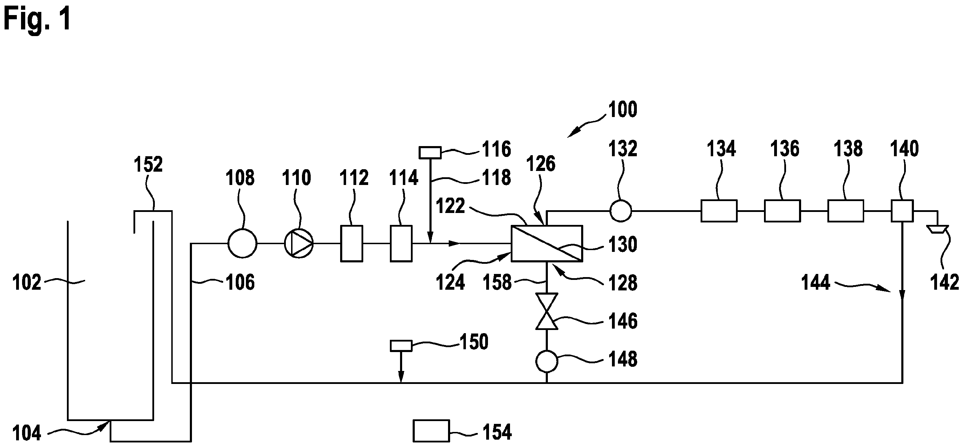

Reference is made to figure 1 showing a schematic diagram of a beverage dispenser 100 according to a first aspect of the present invention. The beverage dispenser comprises a tank 102 that may be filled with raw water, such as tap water. The tank 102 can be removed from the beverage dispenser 100 and carried manually to the water tap.

The beverage dispenser 100 depicted in figure 1 is embodied by a water dispenser outputting filtered and mineralized water and the nozzle 142 into a beverage vessel, such as a glass or a bottle, of a user.

The beverage dispenser 100 comprises an inlet 104 coupled with the tank for drawing input water from the tank 102. The water is passed from the inlet 104 to a first water quality sensor 108 embodied by a first conductivity sensor 108.

The raw water is pressurized by a pump 110 and passed to a sediment filter 112 and an activated carbon filter 114 being in serial flow relationship with the pump 110. An antiscalant dosing element 116 injects by a conduit 118 an antiscalant liquid into the pressurized water, such as after filtering by the activated carbon filter 114. The water is then passed to a first flow meter 120, before it enters a reverse osmosis filter 122. The reverse osmosis filter 122 comprises an inlet 124, a permeate outlet 126 and a concentrate outlet 128 as well as a membrane 130. Due to the pressure generated by the pump 110 permeate passes the membrane 130 and exits the reverse osmosis filter 122 at the permeate outlet 126. The permeate is completely demineralized water. The concentrate is directed to the concentrate outlet 128. The concentrate is water comprising pollutions such as heavy metal undesired minerals, organic compounds, bacteria and the like.

The demineralized water is passed from the permeate outlet 126 to a second conductivity sensor 132, a flow-type carbonizer 134, a flow-type cooling 136 and a flow-type mineralization device 138 for remineralizing the demineralized permeate according to the preferences of a user. An output valve 140 may pass the water to an output nozzle 142 in case beverage according to the requirements of a user is generated, or to a drain conduit 144 or back to the water tank 102 during a cleaning operation or beverage dispense preparation operation of the beverage dispenser 100.

The concentrate outlet 128 of the reverse osmosis filter 122 is connected to a flow limiter 146. The flow limiter 146 determines by its inner cross section and area, respectively through which the concentrate flows, the volumetric ratio between the permeate and concentrate.

The water then passes an ozone emitting element 150 injecting ozone into the water. Then, the water is passed to an output 152 of a concentrate conduit 158 that is adapted to pass the concentrate into the tank 102, where it is mixed with the water in the tank 102, which may comprise a mixture of tap water and concentrate and antiscalant (in a low concentration).

The flow limiter 146 is configured such that approximately 40 % to approximately 60 %, preferably approximately 45 % to approximately 55 % of the water entering the reverse osmosis inlet passes the concentrate outlet. This provides the advantage, that even tap water having a high salinity or a high water hardness can be filtered by the beverage dispenser 100 of the present invention for generating water to be dispensed by a nozzle 142 into a user vessel. In one embodiment the flow limiter 146 may be an adjustable flow limiter for adjusting the volumetric ratio between permeate and concentrate to local requirements.

The present invention recirculates the concentrate for improving the yield of beverage output to a user for a given volume of raw water entered into the tank 102. The concentrate may be recirculated until the salinity and/or the concentration of salts (minerals) is so high that water hardness would precipitate on the membrane and membrane blockage would occur. The first conductivity sensor 108 determines the conductivity of the water drawn from the tank 102. If the conductivity of the water drawn from the tank 102 is higher than approximately 1000 µS/cm, preferably higher than approximately 1200 µS/cm, more preferred higher than 1500 µS/cm the controller 154 operationally coupled with the first conductivity sensor 108 stops operation of the pump 110 and/or request discharge of the concentrate in the tank and refilling of the tank 102 with raw water.

The ozone emission device 150 may be an electrochemical cell producing ozone directly in the water, an ozone generator producing ozone from air oxygen by electrical discharge or from air oxygen by UV radiation (such as 182 nm) and injecting it into the water or the like emitting ozone in an amount (concentration) of ppb into the concentrate or the permeate. The ozone prevents formation of biological films, algae, mildew or the like in the tank and in components of the water dispenser 100 upstream of the activated carbon filter 114. The activated carbon filter 114 filters and/or destroys the ozone from the water drawn from the tank 102, such that a user does not experience any taste of ozone in the water drawn from the output nozzle 142 of the water dispenser 100.

The controller 154 commences preparing the water dispenser 100 for outputting beverage when a user request beverage to be output. In a first step the controller 154 instructs the pump 110 to pump water from the tank 102 through the sediment filter 114, the activated carbon filter and the reverse osmosis filter 122. The permeate output by the permeate outlet 126 of the reverse osmosis filter 122 passes thorough the water preparation elements, such as the flow-type carbonizer 134 for carbonizing water, the flow-type cooling 136 for tempering the water and the flow-type mineralization device 138 for adding desired minerals to the water. The output valve 140 is switched such that the permeate output from the permeate outlet 126 of the reverse osmosis filter 122 is passed to a drain conduit 144. By this kind of operation, the beverage preparation elements 134, 136 and 138 can be flushed and any residual water is removed from the beverage preparation elements 134, 136 and 138. Alternatively or additionally the controller 154 may instruct the flow-type cooling 136 to commence cooling such that beverage entering the flow type cooling device 136 will be cooled within a comparably short time span to the set temperature desired by a user, when preparing beverage output by the nozzle 142.

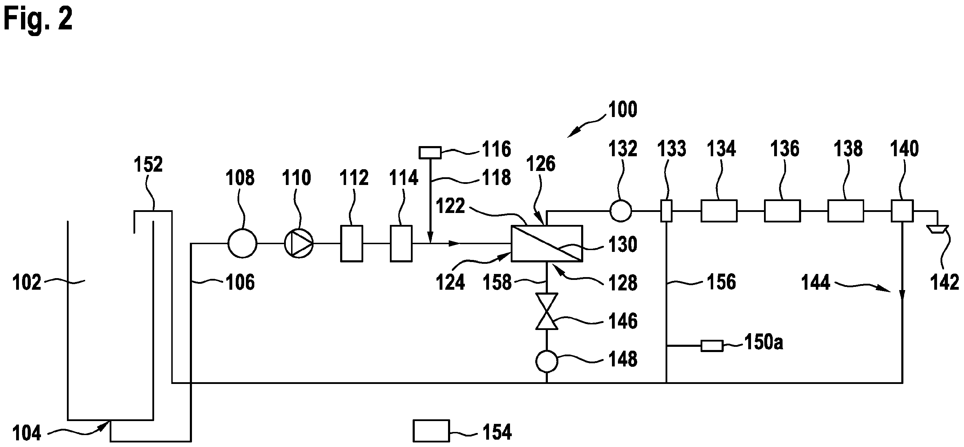

Reference is made to figure 2, showing a preferred embodiment of the present invention. The second embodiment generally corresponds to the first embodiment depicted in figure 1, however the ozone emitting element 150a is connected to a permeate drain conduit 156 coupled between the permeate outlet 126 of the reverse osmosis filter 122 and the tank 102. The ozone emitting element 150a is configured to inject ozone into the permeate drain conduit 156. Due to different concentrations of ions on the concentrate side of the membrane 130 of the reverse osmosis filter 122 and permeate side and the membrane 130 of the reverse osmosis filter 122 ions diffuse from the concentrate side of the membrane 130 of the reverse osmosis filter 122 to the permeate side of the membrane 130 reverse osmosis filter 122 during stagnation. Thereby, the ion concentration of the permeate in the reverse osmosis filter 122 is increased during stagnation. To avoid this increase of ion concentration during stagnation the permeate is flushed at predetermined time intervals and drained by the permeate drain conduit 156 coupled between the permeate outlet 126 of the reverse osmosis filter 122 and the tank 102 by activating the pump 110 for pressing an aqueous liquid from the tank 102 to the membrane 130 of the reverse osmosis filter 122. Thereby, permeate and concentrate is generated. The concentrate is passed by the concentrate conduit 158 to the tank 102. The permeate is passed by the permeate drain conduit 156 to the tank 102. The ozone emitting element 150a is adapted to inject the ozone into the permeate drain conduit 156. This embodiment prevents scaling of the ozone emitting element 150a.

During normal operation the controller 154 switches a flushing valve 133 into a first position such that permeate is passed from the permeate outlet 126 of the reverse osmosis filter 122 to the beverage preparation elements 134, 136 and 138 for preparing beverage and outputting beverage by the nozzle 142. During a flushing operation the controller 154 switches the flushing valve 133 into a second position such that permeate is passed from the permeate outlet 126 of the reverse osmosis filter 122 to the permeate drain conduit 156. Thereby, a undesired high concentration of ions in the permeate caused by diffusion of ions from the permeate through the membrane 130 of the reverse osmosis filter 122 during stagnation is avoided. In one embodiment, the controller 154 may switch the flushing valve 133 for a predetermined time span into the second position for flushing any permeate into which ions may have been diffused during a stagnation period. Then, the controller may switch the flushing valve into the first position for flushing or pretempering the beverage preparation elements 134, 136, 138 and for outputting the beverage by the nozzle 142.

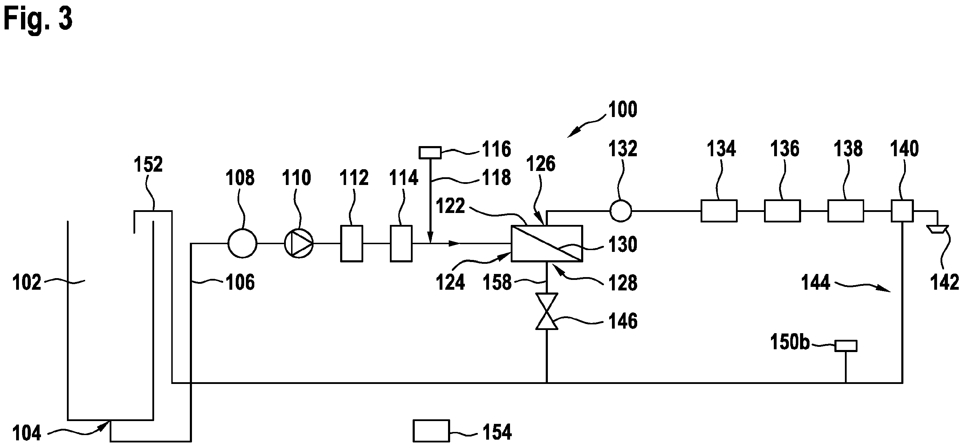

Reference is made to figure 3, showing a third embodiment of the present invention. The third embodiment generally corresponds to the first embodiment depicted in figure 1, however the ozone emitting element 150b is connected to the drain conduit 144 and emits the ozone into the drain conduit 144. The drain conduit 144 passes the liquid received from the at least on beverage preparation element 134, 136, 138 and the output valve 140 to the tank 102. The liquid enters the drain conduit 144 during a cleaning operation or beverage dispensing preparation operation. Thus, no minerals have been added to the permeate by the mineralization device 138. This embodiment prevents scaling of the ozone emitting element 150b.

The present invention increases the yield of the water dispenser, since raw water in a tank is recirculated and permeate is extracted therefrom, until the concentration of salts in the water in the tank reaches a threshold at which no permeate can be generated at adequate efficiency by the reverse osmosis filter. Further, the present invention allows the beverage dispenser to output beverage within a comparable short time span and without stagnation of beverage in any component downstream of the permeate outlet of the reverse osmosis filter, particularly in the beverage preparation elements 134, 136 and 138.

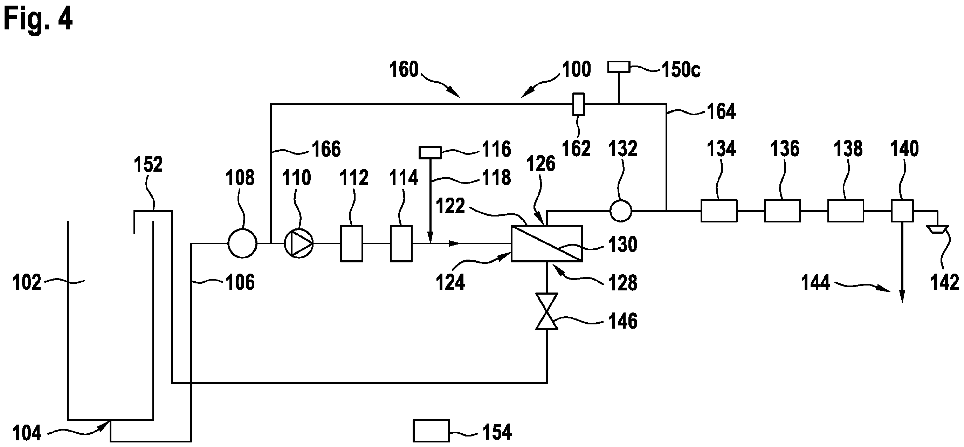

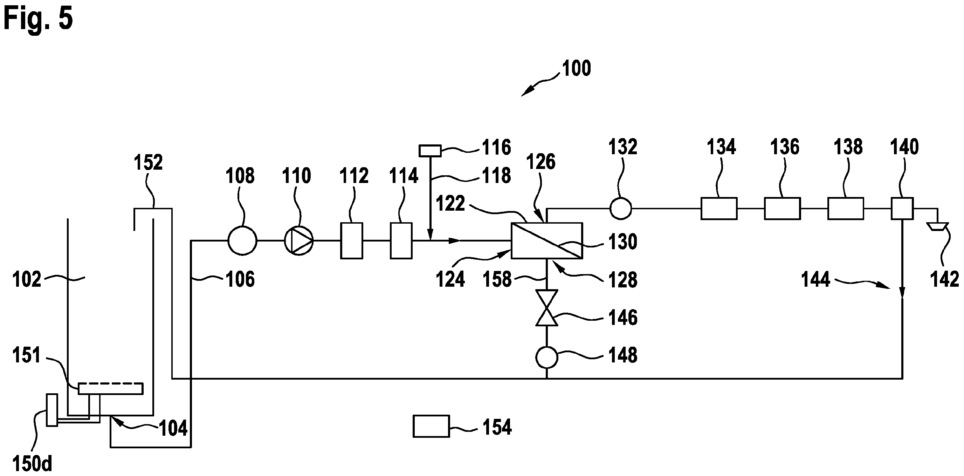

Reference is made to figure 4, showing a fourth embodiment of the present invention. The second embodiment generally corresponds to the first embodiment depicted in figure 1, however the ozone emitting element is connected to a backward flushing element 160 of a membrane flushing element. The backward flushing element 160 comprises a first conduit 164 coupled with the permeate outlet 126 of the reverse osmosis filter 122 and a second conduit 166 coupled to an inlet of the pump 110. Between the first conduit 164 and second conduit 166 a tank-pump unit 162 is located that stores permeate and pumps permeate in the direction of the membrane 130 of the reverse osmosis filter 122 for flushing the membrane 130. The ozone emitting element 150c is connected with the backward flushing element 160 and emits ozone into the first conduit 164. This embodiment prevents scaling of the ozone emitting element 150c and formation of a biological film on the membrane 130. Figure 5 shows a fifth embodiment generally corresponding to the first embodiment. An ozone generating device 150d is arranged at the lower portion of the tank and connected to a spray head 151 with a plurality of openings for emitting ozone into the aqueous liquid in the tank 102. The ozone generating device 150d generates ozone by Corona discharge of oxygen in the air. The ozone is injected by the spray head 151 into the tank 102.

## Claims

1. A beverage dispenser, having
- a tank, in which the raw water is filled;
- a beverage dispenser inlet coupled with the tank for drawing water from the tank;
- an outlet for outputting beverage into a user vessel; and
- a reverse osmosis filter for filtering the water drawn from the tank having a reverse osmosis filter inlet, a permeate outlet for outputting permeate and a concentrate outlet for outputting concentrate,
- wherein the inlet of the reverse osmosis filter is coupled with the beverage dispenser inlet; and
- wherein the concentrate outlet of the reverse osmosis filter is coupled with the tank such that concentrate flows into the tank;
further comprising:
- a first water quality sensor coupled between the beverage dispenser inlet and the reverse osmosis filter inlet; and
- a controller connected with the first water quality sensor;
- wherein the first water quality sensor transmits a water quality indicator value indicative of the quality of the water drawn from the tank to the controller; and
- wherein the controller is adapted to at least one of the following:
- stop operation of the pump, if the water quality value transmitted from the first quality sensor is below a predefined threshold; and
- request discharge and refilling of the tank, if the water quality value transmitted from the first quality sensor is below a predefined threshold.

2. The beverage dispenser according to claim 1, **characterized by** at least one of the following:
- the tank is removable from the beverage dispenser for discharging and refilling the tank;
- the tank comprises an opening configured for filling the tank with raw water;
- the beverage dispenser comprises an opening configured for refilling the tank with raw water.

3. The beverage dispenser according to claim 1 or 2, wherein the first water quality sensor comprises at least one of a conductivity sensor, a water hardness sensor, a Calcium sensor, and a Magnesium sensor connected with the controller.

4. The beverage dispenser according to any one of claims 1 to 3, wherein, if the conductivity of the water drawn from the tank determined by the first water quality sensor is higher than approximately 450 µS/cm, preferably higher than approximately 500 µS/cm, more preferred higher than 600 µS/cm the controller is adapted to at least one of the following:
- stop operation of the pump; and
- request discharge and refilling of the tank.

5. The beverage dispenser according to any one of claims 1 to 4, further comprising an antiscalant dosing element adapted to meter antiscalant upstream of a membrane of the reverse osmosis filter.

6. The beverage dispenser according to claim 5, wherein the antiscalant dosing element is connected with the controller and wherein the controller controls the volume of dispensed antiscalant depending on the water quality indicator value determined by the first water quality sensor.

7. The beverage dispenser according to claim 5 or 6, wherein, if the conductivity of the water drawn from the tank determined by the first water quality sensor is higher than approximately 800 µS/cm, preferably higher than approximately 1000 µS/cm, more preferred higher than 1200 µS/cm the controller is adapted to at least one of the following:
- stop operation of the pump; and
- request discharge and refilling of the tank.

8. The beverage dispenser according to any one of claims 1 to 7, further comprising a flow limiter arranged downstream of the concentrate outlet of the reverse osmosis filter.

9. The beverage dispenser according to claim 8, wherein the flow limiter is configured such that approximately 40 % to 60 %, preferably approximately 45 % to 55 % of the water entering the reverse osmosis filter inlet passes the concentrate outlet.

10. The beverage dispenser according to claim 8 or 9, wherein the flow limiter is connected with the controller and wherein the flow limiter is arranged to adapt the flow rate through the flow limiter in response to a command of the controller.

11. The beverage dispenser according to any one of claims 1 to 10, comprising a disinfection agent emitting device, **characterized by** at least one of the following:
- the disinfection agent emitting device is configured to inject disinfection agent into an aqueous liquid passed into the tank;
- the disinfection agent emitting device is configured to inject disinfection agent into an aqueous liquid in the tank.

12. The beverage dispenser according claim 11, wherein the disinfection agent emitting device comprises at least one of the following:
- an ozone emitting element configured to inject ozone into an aqueous liquid passed into the tank;
- an ozone emitting element configured to inject ozone into an aqueous liquid in the tank;
- a silver ion emitting element configured to inject silver ions into an aqueous liquid passed into the tank;
- a silver ion emitting element configured to inject silver ions into an aqueous liquid in the tank.

13. The beverage dispenser according to any one of claims 1 to 12, comprising a permeate drain conduit coupled between the permeate outlet of the reverse osmosis filter and the tank, wherein the disinfection agent emitting device is configured to inject disinfection agent into the permeate drain conduit.

14. The beverage dispenser according to any one of claims 1 to 13, further comprising:
- at least one beverage preparation element downstream of the permeate outlet of the reverse osmosis filter; and
- a valve connected downstream of the at least one beverage preparation element, wherein the valve is adapted to pass a liquid from the at least one beverage preparation element in a first operation mode to a nozzle for outputting the beverage to a user vessel and to pass the liquid from the at least one beverage preparation element in a second operation mode to a drain conduit configured to pass the liquid into the tank;
- wherein the ozone emitting element emits the ozone into the drain conduit.

15. A method of operating a beverage dispenser, comprising the following steps:
- drawing water from a tank for storing raw water and associated with the beverage dispenser;
- pumping the water drawn from the tank to an inlet of a reverse osmosis filter;
- passing filtered water from a permeate outlet of the reverse osmosis filter to the at least one beverage preparation element; and
- passing concentrate from a concentrate outlet to the tank associated with the beverage dispenser;
- determining at least one parameter of the raw water; and
- if the at least one parameter of the raw water surpasses a predetermined threshold, stop drawing water from the tank; and/or request discharge and refilling of the tank.
